# EUROPEAN PATENT SPECIFICATION

(11) **EP 2 528 728 B1**
(45) Date of publication and mention of the grant of the patent: **18.12.2019**
(21) Application number: 11702578.3
(22) Date of filing: 26.01.2011
(51) Int. Cl.: B29C 65/10, B32B 7/02

(54) **PROCESS FOR THE PRODUCTION OF A CONTAINER FROM A PLANAR COMPOSITE WITH AN INNER LAYER BY HOT FOLDING**
VERFAHREN ZUR HERSTELLUNG EINES BEHÄLTERS AUS EINEM EBENEN VERBUNDSTOFF MIT INNENSCHICHT MITTELS HEISSFALZUNG
PROCESSUS DE PRODUCTION D'UN RÉCIPIENT À PARTIR D'UN COMPOSITE PLAN DOTÉ D'UNE COUCHE INTÉRIEURE PAR PLIAGE À CHAUD

(30) Priority: 26.01.2010 DE 102010005849
(43) Date of publication of application: 05.12.2012
(73) Proprietor: SIG Technology AG, 8212 Neuhausen (CH)
(72) Inventor: WOLTERS, Michael, 52525 Heinsberg (DE); PELZER, Stefan, 52134 Herzogenrath (DE); KAUL, Matthias, 52078 Aachen (DE); LORENZ, Günther, 52531 Übach-Palenberg (DE); PETERGES, Olivier, B-4700 Eupen (BE); SCHMIDT, Holger, 52459 Inden-Lamersdorf (DE)
(74) Representative: Herzog IP Patentanwalts GmbH
(86) International application number: PCT/EP2011/000314
(87) International publication number: WO 2011/091987

(56) References cited:
- EP-A1- 1 232 856
- WO-A1-93/22131
- WO-A1-02/090206
- US-A1- 2005 037 162

## Description

The present invention relates generally to a process for the production of a container surrounding an interior, comprising the steps a. provision of a planar composite comprising i. a carrier layer, ii. a barrier layer of plastic joined to the carrier layer, iii. at least one layer of thermoplastic plastic KSa joined to the barrier layer of plastic, the at least one layer of plastic optionally being a plastics mixture of at least two plastics, b. folding of the planar composite to form a fold with at least two fold surfaces adjacent to one another and c. joining of respectively at least a part region of the at least two fold surfaces to form a base or a top of the container.

For a long time foodstuff, whether foodstuff for human consumption or also animal feed products, have been preserved by being stored either in a can or in a glass jar closed with a lid. The shelf life can, for example, be increased by disinfecting as far as possible in each case the foodstuff and the container, here the glass jar or can, separately and then filling the container with the foodstuff and closing it. Alternatively, shelf life can be increased by autoclaving the foodstuff while being in the container. However, these measures, which in themselves have been proven for a long time, for increasing the shelf life of foodstuff have a number of disadvantages.

Because of their essentially cylindrical shape, cans and glass jars have the disadvantage that very dense and space-saving storage is not possible. Furthermore, cans and glass jars have a considerable intrinsic dead-weight, which leads to an increased consumption of energy during transportation. A quite high consumption of energy is moreover necessary for the production of glass, tinplate or aluminium, even if the raw materials used for this originate from recycling. In the case of glass jars, an increased outlay on transportation is an added complication. The glass jars are usually prefabricated in a glassworks and must then be transported to the foodstuff filling plant utilizing considerable transportation volumes. Glass jars and cans moreover can be opened only with a considerable application of force or with the aid of tools, and therefore rather inconveniently. In the case of cans, there is also a high risk of injury from sharp edges which arise during opening. In the case of glass jars, glass splinters are forever entering into the foodstuff during filling or opening of filled glass jars, which in the worst case can lead to internal injuries on consumption of the foodstuff.

Other packaging systems for storing foodstuff for a long period of time as far as possible without impairment are known from the prior art. These are containers produced from planar composites - often also called laminate. Such planar composites are often built up from a layer of thermoplastic, a carrier layer usually made of cardboard or paper, an adhesion promoter layer, an aluminium layer and a further layer of plastic, as disclosed, inter alia, in WO 90/09926 A2.

These laminated containers already have many advantages over the conventional glass jars and cans. Nevertheless, possibilities for improvement also exist for these packaging systems. Thus, in regions of the planar composites which are exposed to high mechanical stresses during production of the container, small defects are at times being formed, such as cracks, blisters or unsealed pockets or microchannels up to leaks, in which germs can deposit themselves or penetrate into the container, and the foodstuff in the container can decay more easily. These germs in small defects of the containers cannot be counteracted even by a more intensive disinfecting of the foodstuff. Even the attempt at more intensive disinfection of the container before filling with the foodstuff scarcely leads to the desired long storage times. Any damage to an aluminium barrier layer furthermore leads to trouble spots in respect of entry of oxygen into the container, which in turn contributes towards losses in the quality of the foodstuff and therefore a shortened shelf life. Regions during production of the container which have creasing crosses and are folded particularly sharply or in several dimensions, for example in the corners of the base and top region of the containers, are particularly at risk.

Generally, the object of present invention is to at least partly eliminate the disadvantages emerging from the prior art.

An object according to the invention is furthermore to provide a process with which a container which is suitable, also in high piece numbers, for storing a foodstuff with a long shelf life, without the container having to be particularly intensively disinfected, can be produced. An object according to the invention is moreover to reduce, with the same disinfecting of the foodstuff and of the container accommodating this, the proportion of foodstuff-filled containers with a low shelf life by renewed disinfecting of the foodstuff.

An object according to the invention is furthermore to provide a process which allows production of containers of at least the same quality compared with the prior art at increased production speeds.

A contribution towards achieving at least one of the above objects is made by the subject matter of the classifying claims. The subject matter of the sub-claims which are dependent upon the classifying claims represents preferred embodiments of this contribution towards achieving the objects.

A contribution towards achieving at least one of the abovementioned objects is made by a process for the production of a container surrounding an interior according to claim 1

The containers which can be produced by the process according to the invention preferably have at least one, preferably between 6 and 16 edges, particularly preferably between 7 and 12 edges. According to the invention, edge is understood as meaning in particular regions which, on folding of a surface, are formed by two parts of this surface lying over one another. Edges which may be mentioned by way of example are the elongated contact regions of respectively two wall surfaces of a container essentially in the shape of a rectangular parallelepiped. Such a container in the shape of a rectangular parallelepiped as a rule has 12 edges. In the container, the container walls preferably represent the surfaces of the container framed by the edges. The container walls of a container according to the invention are preferably formed to the extent of at least 50, preferably to the extent of at least 70 and moreover preferably to the extent of at least 90 % of their surface from a carrier layer as part of the planar composite.

The term "joined" used here includes the adhesion of two objects beyond van der Waals forces of attraction. These objects can either follow one another directly or be joined to one another via further objects. For the planar composite, this means, for example, that the carrier layer can be joined directly and therefore immediately to the barrier layer of plastic, or can also be joined indirectly via one or more layers, for example via one or more adhesion promoter layers, direct joining being preferred. According to a particular embodiment of the planar composite, the at least one layer of thermoplastic KSa is preferably bonded directly to the barrier layer of plastic.

In the process according to the invention, it is preferable for the planar composite also to comprise one or two and more further layers in addition to a carrier layer, a barrier layer of plastic joined to the carrier layer and at least one layer of thermoplastic KSa, which is provided on the side of the barrier layer of plastic facing away from the carrier layer. Preferably, the further layer or layers is/are adhesion promoter layers. According to one embodiment, these can be provided between the carrier layer and the barrier layer of plastic. It is, however, preferable here that the barrier layer of plastic and the carrier layer are not joined to one another by means of an adhesion promoter layer. In another embodiment, an adhesion promoter layer can be provided between the barrier layer of plastic and the at least one layer of thermoplastic plastic KSa, in order to improve the cohesion of the layers and thus to make delamination difficult. In one embodiment according to the invention, an adhesion promoter layer is provided between the carrier layer and the barrier layer of plastic, the at least one layer of thermoplastic KSa preferably following the barrier layer of plastic. In another embodiment according to the invention, no adhesion promoter layer is provided between the carrier layer and the barrier layer of plastic, but at least one adhesion promoter layer is arranged between the barrier layer of plastic and the at least one layer of thermoplastic plastic KSa. Furthermore, in a further embodiment at least one adhesion promoter layer is arranged between the carrier layer and the barrier layer of plastic and at least one further adhesion promoter layer is arranged between the barrier layer of plastic and the at least one layer of thermoplastic KSa.

Possible adhesion promoters are all polymers which, by means of suitable functional groups, are suitable for generating a firm join by the formation of ionic bonds or covalent bonds to the surface of the other particular layer. Preferably, these are polyolefins functionalized by copolymerization with acrylic acid, acrylates, acrylate derivatives or carboxylic acid anhydrides carrying double bonds, for example maleic anhydride, or at least two of these. Among these, polyethylene/maleic acid copolymers are particularly preferred, these being marketed, for example, by DuPont under the trade name Bynell®. It is accordingly preferred for none of the layers of thermoplastic that may be present in the planar composite to be an adhesion promoter. Preferably, the above described at least one layer of thermoplastic plastic KSa and also the thermoplastic plastic layer KSu, that will be described later on, are not adhesion promoters.

In the process according to the invention, at least one, or two to five layers of thermoplastic KSa joined to the barrier layer of plastic are provided. It is moreover preferable for the at least one layer of plastic KSa to be present as a mixture of at least two plastics. It is furthermore preferable for the at least one layer of thermoplastic KSa to comprise an inorganic particulate filler.

In a further preferred embodiment of the process according to the invention, the at least one, preferably at least two or also all of the at least one layer of thermoplastic plastic KSa has or have a melting temperature below the melting temperature of the barrier layer of plastic. The melting temperature of the at least one or of the at least two or also of all the layers of thermoplastic plastic KSa and the melting temperature of the barrier layer of plastic preferably differ by at least 1 K, particularly preferably by at least 10 K, still more preferably by at least 20 K, moreover preferably at least 100 K. The temperature difference should preferably be chosen only so high that the melting temperature is not reached by any plastic of the barrier layer of plastic, and melting of the barrier layer of plastic thus does not occur during folding.

In the process according to the invention, folding is understood as meaning an operation in which preferably an elongated kink forming an angle is generated in the folded planar composite by means of a folding edge of a folding tool. For this, two adjacent surfaces of a planar composite are often bent ever more towards one another.

In the process according to the invention, the joining can be effected by any measure which appears to be suitable to the person skilled in the art and which makes possible a join which is as gas- and water-tight as possible. The joining can be effected by sealing or gluing or a combination of the two measures. In the case of sealing, the join is created by means of a liquid and solidification thereof. In the case of gluing, chemical bonds which create the join form between the interfaces or surfaces of the two objects to be joined. In the case of sealing or gluing, it is often advantageous for the surfaces to be sealed or glued to be pressed together with one another.

The carrier layer of the container according to the invention can conventionally be made of any material which is suitable for this purpose to the person skilled in the art and which has an adequate strength and rigidity to give the container stability to the extent that in the filled state the container essentially retains its shape. In addition to a number of plastics, plant-based fibrous substances, in particular celluloses, preferably sized, bleached and/or non-bleached celluloses are preferred, paper and cardboard being particularly preferred.

Generally, the barrier layer of plastic comprises, in each case based on this, at least 70 wt.%, preferably at least 80 wt.% and particularly preferably at least 95 wt.% of at least one plastic which is known to the person skilled in the art for this purpose, in particular because of aroma or gas barrier properties which are suitable for packaging containers. Preferably, thermoplastic plastics are employed here. In the process according to the invention, it is preferable for the barrier layer of plastic to have a melting temperature in a range of from more than 155 to 300 °C, preferably in a range of from 160 to 280 °C and particularly preferably in a range of from 170 to 270 °C. Possible plastics, in particular thermoplastic plastics, here are plastics carrying N or O, both by themselves and in mixtures of two or more. The barrier layer of plastic is preferably as far as possible homogeneous and is therefore preferably obtainable from melts, such as are formed, for example, by extrusion, preferably by laminating extrusion. In contrast, barrier layers of plastic which are obtainable by deposition from a solution or dispersion of plastics are preferred less since, in particular if deposition or formation takes place from a plastics dispersion, these often have at least partly particulate structures which show gas and moisture barrier properties which are less good compared with the barrier layers of plastic which are obtainable from melts.

In one embodiment of the process according to the invention, the barrier layer of plastic is made of polyamide (PA) or polyethylene vinyl alcohol (EVOH) or a mixture thereof.

All the PAs which appear to be suitable to the person skilled in the art for the production of and use in the containers by the process according to the invention are possible as a PA. PA 6, PA 6.6, PA 6.10, PA 6.12, PA 11 or PA 12 or a mixture of at least two of these are to be mentioned in particular, PA 6 and PA 6.6 being particularly preferred and PA 6 furthermore being preferred. PA 6 is commercially obtainable as amorphous polyamides under the trade names Akulon®, Durethan® and Ultramid® or also MXD6, Grivory® and Selar®. The molecular weight of the PA should preferably be chosen such that the molecular weight range chosen on the one hand makes a good laminating extrusion possible in the production of the planar composite for the container, and on the other hand the planar composite itself has adequately good mechanical properties, such as a high elongation at break, a high abrasion resistance and an adequate rigidity for the container. This results in preferred molecular weights, determined as the weight-average via gel permeation chromatography (GPC) (preferably based on the International Standard ISO/DIS 16014-3:2003) with light scattering (preferably based on the International Standard ISO/DIS 16014-5:2003), in a range of from 3^{∗}10³ to 1^{∗}10⁷ g/mol, preferably in a range of from 5^{∗}10³ to 1^{∗}10⁶ g/mol and particularly preferably in a range of from 6^{∗}10³ to 1^{∗}10⁵ g/mol. Furthermore, in connection with the processing and mechanical properties, it is preferable for the PA to have a density in a range of from 1.01 to 1.40 g/cm³, preferably in a range of from 1.05 to 1.3 g/cm³ and particularly preferably in a range of from 1.08 to 1.25 g/cm³. It is furthermore preferable for the PA to have a viscosity number in a range of from 130 to 185 ml/g and preferably in a range of from 140 to 180 ml/g, determined in accordance with ISO 307 in 95 % sulphuric acid.

For the polyethylene/vinyl alcohol (EVOH) all polymers can be used which appear to be suitable to the person skilled in the art for the production of and use in the containers by the process according to the invention. Examples of suitable EVOH-copolymers include those resins which are sold under the trademark EVAL™ from EVAL Europe nv, Belgium, like EVAL™ F101B, EVAL™ F171B, EVAL™ T101B, EVAL™ H171B, EVAL™ E105B, EVAL™ F101A, EVAL™ F104B, EVAL™ E171B, EVAL™ FP101B, EVAL™ FP104B, EVAL™ EP105B, EVAL™ M100B, EVAL™ L171B, EVAL™ LR171B, EVAL™ J102B, EVAL™ C109B or EVAL™ G156B. Preferably, the EVOH-copolymers are characterized by at least one, more preferably all of the following properties:
- an ethylene-content in the range from 20 to 60 mol%, preferably from 25 to 45 mol%,
- a density (determined according to ISO 1183) in the range from 1.00 to 1.4 g/cm³, preferably from 1.10 to 1.30 g/cm³,
- a melt flow rate (determined according to ISO 1133 at 210°C and 2.16 kg for melting temperatures below 210 °C and at 230°C and 2.16 kg for melting temperatures between 210 °C and 230°C) in the range from 1 to 15 g/10min, preferably 2 g/10min to 13 g/10min;
- a melting temperature (determined according to ISO 11357) in the range from 155 to 235°C, preferably 165 to 225°C;
- an oxygen transmission rate (determined according to ISO 14663-2 annex C at 20°C and 65% RH) in the range from 0.05 to 3.2 cm³·20µm/m²·day·atm, preferably 0.1 to 0.6 cm³·20µm/m²·day·atm.

It is furthermore preferable for the polyamide layer, for the polyethylene/vinyl alcohol layer or for the layer that is a mixture of polyamide and polyethylene/vinyl alcohol, to have a weight per unit area in a range of from 2 to 120 g/m², preferably in a range of from 3 to 75 g/m² and particularly preferably in a range of from 5 to 55 g/m². It is furthermore preferable for the polyamide layer, for the polyethylene/vinyl alcohol layer or for the layer that is a mixture of polyamide and polyethylene/vinyl alcohol to have a thickness in a range of from 2 to 90 µm, preferably a range of from 3 to 68 µm and particularly preferably in a range of from 4 to 50 µm.

Generally, the at least one layer of thermoplastic KSa comprises, in each case based on this, at least 70 wt.%, preferably at least 80 wt.% and particularly preferably at least 95 wt.% of at least one thermoplastic which appears to be suitable to the person skilled in the art for this purpose, and in particular for the purpose of the extrusion, protection of the carrier layer and a good sealability.

In a further embodiment of the process according to the invention, the at least one layer of thermoplastic KSa is filled with a particulate inorganic solid. Possible particulate inorganic solids are all the solids which appear to be suitable to the person skilled in the art and which, inter alia, lead to an improved distribution of heat in the plastic and therefore to a better sealability of the plastic.

Preferably, the average particle sizes (d50 %) of the inorganic solids, determined by sieve analysis, are in a range of from 0.1 to 10 µm, preferably in a range of from 0.5 to 5 µm and particularly preferably in a range of from 1 to 3 µm. Possible inorganic solids are, preferably, metal salts or oxides of di- to tetravalent metals. Examples which may be mentioned here are the sulphates or carbonates of calcium, barium or magnesium or titanium dioxide, preferably calcium carbonate.

The amount of the particulate inorganic solid in layer KSa may be in the range from 0.1 to 30 wt.%, preferably 0.5 to 20 wt.% and more preferably 1 to 5 wt.%, based on the total weight of each layer KSa.

In a further embodiment of the process according to the invention, it is preferable for the fold surfaces to form an angle µ of less than 90°, preferably of less than 45° and particularly preferably of less than 20°. The fold surfaces are often folded to the extent that these come to lie on one another at the end of the folding. This is advantageous in particular if the fold surfaces lying on one another are subsequently joined to one another in order to form the container base and the container top, which is often configured gable-like or also flat. Regarding the gable configuration, reference may be made by way of example to WO 90/09926 A2.

In another embodiment of the process according to the invention, it is preferable for the at least one layer of thermoplastic KSa to be a plastics mixture and preferably to comprise as one of at least two mixture components 10 to 50 wt.%, preferably 15 to 45 wt.% and particularly preferably 20 to 40 wt.% or also more than 50 to 95 wt.%, preferably 60 to 90 wt.% and particularly preferably 75 to 85 wt.%, in each case based on the plastics mixture, of a polyolefin prepared by means of a metallocene (m-polyolefin). In addition to the good sealability, m-polyolefins show, in particular at higher concentrations, a relatively low stress corrosion cracking with foodstuff of high fat or free fat content. Moreover, one or more additives which differ from the polymers described above can be present in the plastics mixture to the extent of a maximum of 15 wt.%, preferably a maximum of 10 wt.% and particularly preferably 0.1 to 5 wt.%, in each case based on the plastics mixture. It is furthermore preferable for up to a total of 100 wt.%, in each case based on the plastics mixture, of at least one, entirely also two or more, thermoplastic plastics which differ from the m-polyolefin and, if additives are present, also differ from these, to be present in the plastics mixture. In particular, m-polyethylene or m-polypropylene prepared by means of metallocenes, or a mixture of both, are possible as the m-polyolefin, m-polyethylene being particularly preferred. These measures contribute in particular towards widening the sealing window. Furthermore, in a preferred embodiment of the process according to the invention, the at least two layers of thermoplastic plastic have a melting temperature in the range of from 80 to 155 °C, preferably in a range of from 85 to 145 °C and particularly preferably in a range of from 90 to 125 °C. This temperature range promotes joining by sealing. In a further preferred embodiment of the process according to the invention, in the planar composite the at least two layers of thermoplastic plastic are provided, with respect to the carrier layer, towards the interior of the finished container.

Furthermore, in one embodiment of the process according to the invention at least one further layer of thermoplastic plastic KSu is provided, with respect to the carrier layer, facing away from the interior and is joined to the carrier layer. At least one further layer of plastic KSa thus faces, with respect to the carrier layer, the surroundings of the finished container. It is preferable for the at least one further layer of thermoplastic plastic KSu to have a melting temperature in a range of from 80 to 155 °C, preferably in a range of from 90 to 145 °C and particularly preferably in a range of from 95 to 125 °C. It is furthermore preferable for the further layer of thermoplastic plastic KSu to comprise a thermoplastic plastic polymer to the extent of at least 70 wt.%, preferably at least 80 wt.% and particularly preferably at least 95 wt.%, in each case based on the further layer of thermoplastic plastic KSu. Just as in the case of the layer of plastic KSa, the layer of plastic KSu can also comprise inorganic particles, in addition to at least one thermoplastic plastic polymer. The amount of the inorganic particles in layer KSu may be in the range from 0.1 to 30 wt.%, preferably 0.5 to 20 wt.% and more preferably 1 to 5 wt.%, based on the total weight of layer KSu.

Suitable thermoplastic plastic polymers are polymers obtained by chain polymerization, in particular polyolefins, among these cyclic olefin copolymers (COC), polycyclic olefin copolymers (POC), in particular polyethylene, polypropylene or a mixture of polyethylene and polypropylene being preferred and polyethylene being particularly preferred. The melt indices, determined by means of DIN 1133 (for polyethylene preferably determined at 190°C and 2.16 kg and for polypropylene preferably determined at 230°C at 2.16 kg), of the thermoplastic plastic polymers are preferably in a range of from 3 to 15 g/10 min, preferably in a range of from 3 to 9 g/10 min and particularly preferably in a range of from 3.5 to 8 g/10 min.

Among the polyethylenes, HDPE, LDPE, LLDPE, MDPE and PE and mixtures of at least two of these are preferred for the process according to the invention. The melt indices, determined by means of DIN 1133 (preferably determined at 190°C and 2.16 kg), of these polymers are preferably in a range of from 3 to 15 g/10 min, preferably in a range of from 3 to 9 g/10 min and particularly preferably in a range of from 3.5 to 8 g/10 min. In connection with the layer of thermoplastic plastic KSa, and preferably also in connection with thermoplastic plastic layer KSu, it is preferable to employ LDPE.

Furthermore, in one embodiment of the process according to the invention, the at least one, or also all of the layers of thermoplastic plastic is or are heated above the melting temperature of the layers of thermoplastic plastic directly before step b.

It is also preferable here additionally for the at least one further layer of plastic KSu in step b. likewise to have a temperature above the melting temperature of this further layer of plastic. Preferably, before step b., particularly preferably directly before step b., a temperature is maintained which is at least 1 K, preferably at least 5 K and particularly preferably at least 10 K above the melting temperature of these layers. The temperature should as far as possible be above the melting temperature of the particular plastic to the extent that, due to the folding, moving and pressing, the plastic is not changed to the extent that this becomes solid.

Preferably, the heating to these temperatures is carried out by irradiation, by mechanical vibrations, by contact with a hot solid or hot gas, preferably hot air, by induction, by middle- or high frequency application or a combination of these measures. In the case of irradiation, any type of radiation which is suitable to the person skilled in the art for softening the plastics is possible. Preferred types of radiation are IR rays, UV rays and microwaves. Preferred type of vibration is ultrasonic sound. In the case of IR rays, which are also employed for IR welding of planar composites, wavelength ranges of from 0.7 to 5 µm are to be mentioned. Laser beams in a wavelength range of from 0.6 to less than 10.6 µm can furthermore be employed. In connection with the use of IR rays, these are generated by various suitable lamps which are known to the person skilled in the art. Short wavelength lamps in the range of from 1 to 1.6 µm are preferably halogen lamps. Medium wavelength lamps in the range of from > 1.6 to 3.5 µm are, for example, metal foil lamps. Quartz lamps are often employed as long wavelength lamps in the range of >3.5 µm. Lasers are ever more often employed. Thus, diode lasers are employed in a wavelength range of from 0.8 to 1 µm, Nd:YAG lasers at about 1 µm and CO₂ lasers at about 10.6 µm. High frequency techniques with a frequency range of from 10 to 45 MHz, often in a power range of from 0.1 to 100 kW, are also employed.

In the case of ultrasonic sound as a mechanical vibration which is preferred in particular during joining, in addition to folding, at least one, preferably all, of the following sealing parameters is/are preferred:
- P1: a frequency in a range of from 5 to 100 kHz, preferably in a range of from 10 to 50 kHz and particularly preferably in a range of from 15 to 40 kHz;
- P2: an amplitude in a range of from 2 to 100 µm, preferably in a range of from 5 to 70 µm and particularly preferably in a range of from 10 to 50 µm;
- P3: a vibration time (as the period of time in which a vibrating body, such as a sonotrode, acts in contact vibration on the planar composite) in a range of from 50 to 1,000 msec, preferably in a range of from 100 to 600 msec and particularly preferably in a range of from 150 to 300 msec.

It is furthermore preferable for a holding time to follow the vibration time. This is as a rule chosen such that the plastics melted during the vibration time solidify again. The holding time is often in a range of from 50 to 2,000 msec, preferably in a range of from 100 to 1,200 msec and particularly preferably in a range of from 150 to 600 msec. In the case of the holding time, it is furthermore preferable for the pressures acting during the vibration time on the part region of the planar composite to be joined to fall by only a maximum of 10 % and preferably a maximum of 5 % during the holding time.

For a suitable choice of the radiation or vibration conditions, it is advantageous to take into account the intrinsic resonances of the plastics and to choose frequencies close to these.

Heating via contact with a solid can be effected, for example, by a heating plate or heating mould which is in direct contact with the planar composite and releases the heat to the planar composite. Hot air can be directed on to the planar composite by suitable fans, outlets or nozzles or a combination thereof. Contact heating and hot gas are often employed simultaneously. Thus, for example, a holding device which holds a sleeve formed from the planar composite and through which hot gas flows, and which is thereby heated and releases the hot gas through suitable openings can heat the planar composite by contact with the wall of the holding device and the hot gas. Furthermore, the sleeve can also be heated by fixing the sleeve with a sleeve holder and directing a flow from one or two and more hot gas nozzles provided in the jacket holder on to the regions of the sleeve to be heated.

The sealing temperature is preferably chosen such that the plastic(s) involved in the sealing is/are present as a melt. Furthermore, the sealing temperature chosen should not be too high, in order that the exposure of the plastic(s) to heat is not unnecessarily severe, so that they do not lose their envisaged material properties. The sealing temperatures are therefore at least 1 K, preferably at least 5 K and particularly preferably at least 10 K above the melting temperature of the particular plastic.

In a further preferred embodiment of the process according to the invention, it is envisaged that the container is filled with a foodstuff or with an ingredient useful for the preparation of a foddstuff before step b. or after step c. All the foodstuff and ingredients known to the person skilled in the art for human consumption and also animal feed are possible as the foodstuff. Preferred foodstuff and ingredients are liquid above 5 °C, for example drinks. Preferred foodstuff are dairy products, soups, sauces, non-carbonated drinks, such as fruit drinks and juices or teas. Lumpy materials can also be included in the container. The foodstuff or ingredients can on the one hand be filled after disinfection beforehand into a container likewise disinfected beforehand. Furthermore, the foodstuff or ingredients can be disinfected after filling and closing in the container accommodating them. This is as a rule carried out by autoclaving.

In the embodiment of the process according to the invention in which the container is filled with foodstuff or with the ingredient before step b., it is preferable for a tubular structure with a fixed longitudinal seam first to be formed from the planar composite by folding and sealing or gluing the overlapping borders. This tubular structure is compressed laterally, fixed and separated and formed into an open container by folding and sealing or gluing. The foodstuff here can already be filled into the container after the fixing and before the separation and folding of the base in the sense of step b.

In the embodiment of the process according to the invention in which the container is filled with foodstuff or with the ingredient after step c., it is preferable for a container which is obtained by shaping the planar composite and is closed in the region of the base and opened in the region of the top to be employed. Alternatively, a container can be employed that is obtained by shaping the planar composite and closing it in the region of the top with an opening in the region of the base. Shaping of the planar composite and obtaining of such an opened container can be effected by steps b. and c. by any procedure which appears to be suitable for this to the person skilled in the art. In particular, shaping can be carried out by a procedure in which sheet-like container blanks which already take into account the shape of the container in their cut-out are folded such that an opened container is formed over a mandrel. This is as a rule effected by a procedure in which after folding of this container blank, its longitudinal edges are sealed or glued to form a side wall and the one side of the sleeve is closed by folding and further fixing, in particular sealing or gluing.

In another embodiment of the process according to the invention, it is preferable for the planar composite to have at least one crease and for the folding to take place along the crease. A crease is as a rule a usually linear region of the planar composite in which the planar composite is compacted more along this line, compared with the regions adjacent to the line or crease, by a stamping tool. The crease is often formed on one side of the planar composite as a recess running along a line with a bulge running on the other side of the planar composite opposite the recess. This facilitates the folding and the formation of a kink running along the line prepared by the crease, in order to achieve in this way a fold which is as uniform and accurately positioned as possible. Preferably, the crease divides the planar composite into a part of large area and a part of small area compared with the part of large area. Thus, for example, the part of large area can be the side wall of the container and the part of small area can be a surface of the planar composite which forms the base. Furthermore, the part of small area can be the region of the planar laminate which is joined after the folding, in particular by sealing. The crease can be provided at various stages of the production of the planar composite. According to one embodiment, the crease is made in the planar composite after the coating with thermoplastic plastics, which is usually carried out by co-extrusion. In another embodiment, creasing is carried out before the co-extrusion, preferably directly into the carrier layer.

In connection with the filling operation, according to one embodiment of the process according to the invention it is preferable for the foodstuff or the ingredient to be at least partly disinfected before the filling operation. This can be carried out by sterilization, ultra-high heating or pasteurizing. Furthermore, in a preferred embodiment of the process according to the invention, the container or container precursor is itself at least partly disinfected before the filling operation. This can be carried out by sterilizing, preferably by peroxides, in particular hydrogen peroxide or peroxoacetic acid, or radiation. In the process according to the invention it is furthermore preferable for both the abovementioned embodiments to be realized and if possible for the operation to be germ-free. A temperature of more than 50 °C, preferably more than 80 °C is often employed for the disinfecting.

In the process according to the invention, the at least one, preferably at least two and particularly preferably each of the at least one layer of thermoplastic plastic KSa or also the layer of plastic KSu of the part of small area in step b. has a temperature above the melting temperature thereof. It is furthermore preferable in one embodiment in the process according to the invention for the fold to be formed by an edge of a folding tool pressing into the crease. This is the case in particular when the base region is formed. It is furthermore preferable in another embodiment for the fold to be formed by an edge of a folding tool pressing alongside the crease. In this case the edge of the folding tool is usually set directly alongside the crease. This type of folding is preferably employed in the formation of the top region which is gable-like in shape.

The creases can be provided in the planar composite before or after step a, bit before step b..

Usually the creases are provided in the planar composite after step a, but before step b. In this case, a creased planar composite is therefore preferably provided in step a. As a rule the planar composite is usually produced as roll goods by co-extrusion of the individual layers of the planar composite. The creases are provided, preferably applied on these roll goods. Optionally, container blanks can be obtained from the roll goods and provided as planar composite in step a. In these container blanks creases can subsequently be produced or the creases can be produced in the roll good before preparing the container blanks. However, it is also possible for the creases to be produced in the carrier layer already before the co-extrusion. In this case the creases are provided in the planar composite before step a.

In a further embodiment of the process according to the invention, it is preferable for no metal foil, often no aluminium foil, to be provided in the planar composite between the carrier layer and the at least one layer of thermoplastic plastic KSa. The barrier layer of plastic as a rule has sufficiently good barrier properties. Thus, the planar composite employed in the process according to the invention can be configured overall in a form free from metal foils, in particular free from aluminium foils. By this means a composite or a container produced therefrom which is free from metal can be provided. Under "free from metal" it is understood that the composite does not comprise any metal layer, such as an aluminum foil. The expression "free from metal", however, does not exclude the presence of a layer which, as a filler, comprises metal salts.

In the process according to the invention, in a further embodiment a further folding follows step c. as step d., in the further folding at least one, preferably each of the at least one layer or layers of thermoplastic plastic having a temperature which is below the melting temperature of this layer of plastic. The above statements on folding in step b. furthermore also apply here. A sequence of hot folding, hot sealing and further cold folding arises as a result. This sequence is particularly advantageous in the top region of a container in the shape of a rectangular parallelepiped. The essentially triangular regions, called ears, in which locally at least three planar composites come to lie on one another, are fixed here to two opposed sides of the container, in case of a brick-shaped container to the narrow sides of the container, preferably by sealing or gluing, after the container has been closed, the creased crosses formed as a result having particularly few defects, such as breaks in the creased cross, due to this sequence in combination with the planar composite described here.

A container which is particularly well-suited to long-term storage of foodstuff, which can be disinfected under gentle conditions, is obtainable by the process according to the invention. Furthermore, the container, with a high environmental friendliness, is simple and advantageous to produce. This container must not necessarily consist solely of the above described planar composite, but may also comprises additional elements such as one or more spouts, one or more opening aids and/or one or more straws.

### Test methods:

Unless specified otherwise herein, the parameters mentioned herein are measured by means of DIN specifications.

### Figures:

The present invention is now explained in more detail by drawings given by way of example which do not limit it, the figures showing
- 1: a diagram of a container produced by the process according to the invention,
- 2: a process flow diagram of the process according to the invention,
- 3: a diagram of a region of a container to be produced by the process according to the invention,
- 4a: a diagram of folding by the process according to the invention,
- 4b: a diagram of a fold by the process according to the invention,
- 5a: a diagram along a section A-A in the unfolded state,
- 5b: a diagram along a section A-A in the folded state,
- 6: a diagram of a planar composite which can be employed in the process according to the invention,
- 7: a diagram of a planar composite which can be employed in the process according to the invention,
- 8a: a diagram of a sonotrode-anvil arrangement before the sealing,
- 8b: a diagram of a sonotrode-anvil arrangement during and at the end of the sealing.

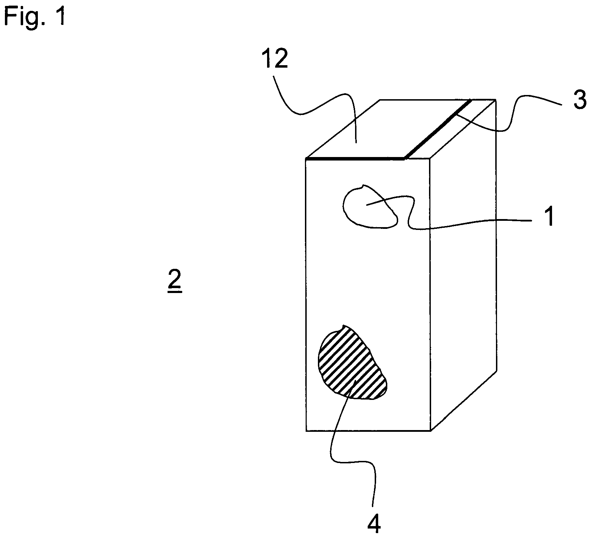

Figure 1 shows a container 2 surrounding an interior 1 and made of a planar composite 3. For a better view, the container 2 is shown with the container base 12, on which the container is conventionally stood, facing upwards.

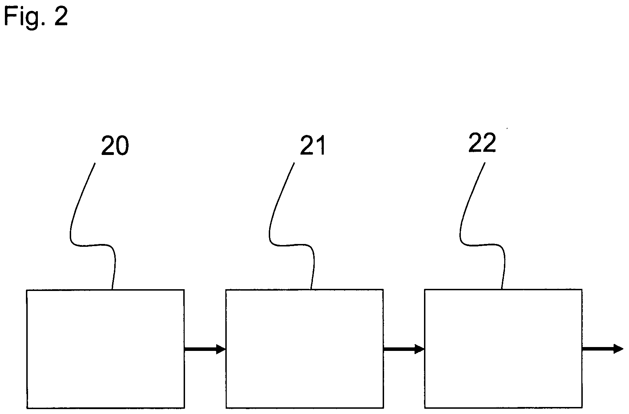

Figure 2 shows a flow diagram of devices and production steps by the process according to the invention. In a composite production 20, the planar composite 3 is produced from a carrier layer 4, a barrier layer 5 of plastic and the layer 6 of thermoplastic plastic KSa and optionally a further layer 13 of thermoplastic plastic KSu and - if necessary - an adhesion promoter layer 19 by an extrusion process and is usually provided as roll goods. In a composite fabrication 21 which follows the composite production 20 indirectly or directly, the crease 14 is produced in the roll goods, which can have been provided with an imprint or decoration beforehand. Furthermore, if the roll goods provided with creases 14 are not employed as such for the production of containers, container blanks are produced in the composite fabrication 21. The composite fabrication 21 is followed by a container production 22, in which in particular the folding and joining take place by the process according to the invention. Filling with a foodstuff can also be carried out here. After the container has been filled with the foodstuff, the container is closed by a further folding and sealing operation, which can also take place in the container production 22 or in a subsequent production unit.

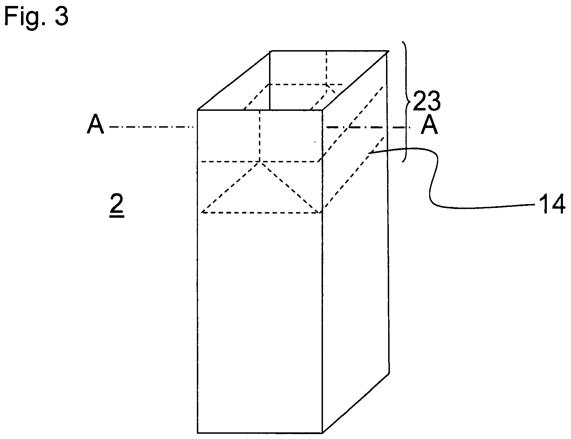

Figure 3 shows a container 2 formed during the process according to the invention, which - for a better view - is shown with a container region 23 envisaged for a base 12 on the top. The container region 23 envisaged for the base 12 has a plurality of creases 14.

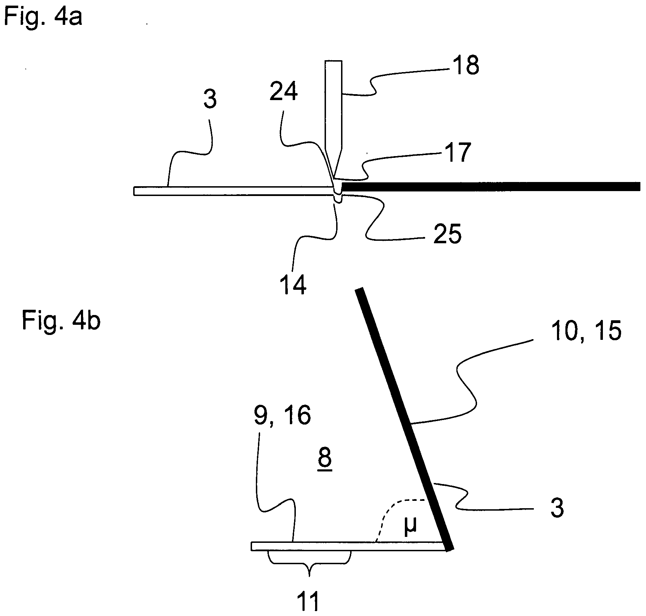

Figure 4a shows the cross-section through a planar composite 2 with a crease 14, formed by a recess 24 and a bulge 25. An edge 17 of a folding tool 18 is provided above the recess 24, in order to engage in the recess 24, so that folding can be carried out around the edge 17 along the crease 14, in order to obtain a fold 8 shown as a cross-section in Figure 4b. This fold 8 has two fold surfaces 9 and 10 which enclose an angle µ and are present as a part 15 of large area and a part 16 of small area. In a part region 11 of the part 16 of small area, the at least one layer 6 or 13 of thermoplastic plastic, as a further layer of plastic KSu, is solid during the folding. By pressing the fold surfaces 9, 10 together, reducing the angle µ to 0°, the two fold surfaces 9, 10 are joined to one another by sealing, during which the layers of plastic which come to lie on one another are melted.

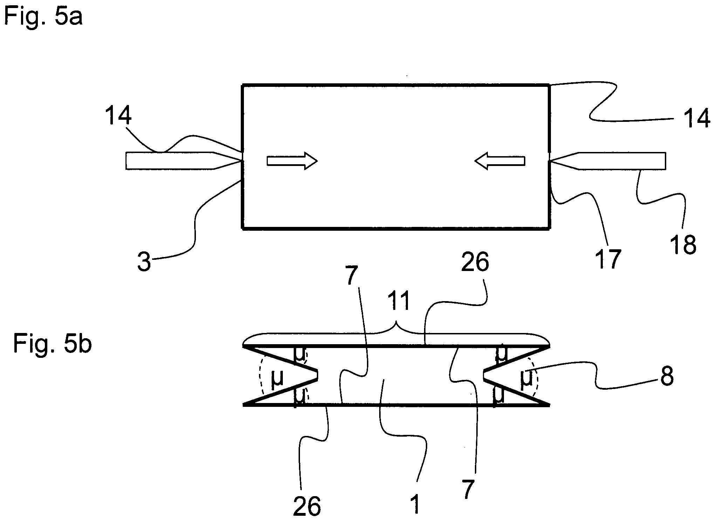

Figure 5a shows a section along the line A-A in Figure 3, before folding, from a planar composite 3 with creases 14. By edges 17 of folding tools 18 which engage in the creases 14 located centrally on the front faces, the creases 14 are moved in the direction of the two arrows, as a result of which the folds 8 shown in Figure 5b with the angles µ are formed. The section shown here through the outermost part to be folded of the container region envisaged for the base 12 of the container 2 has a part region 11 towards the interior 1 in which the at least one layer 6 or 13 of thermoplastic plastic, as a further layer of plastic KSu, is melted. By pressing together the longitudinal sides 26, reducing the six angles µ to 0°, the two inner surfaces 7 of the longitudinal sides 26 facing the interior 1 are joined to one another by sealing, in order thus to create the base 12.

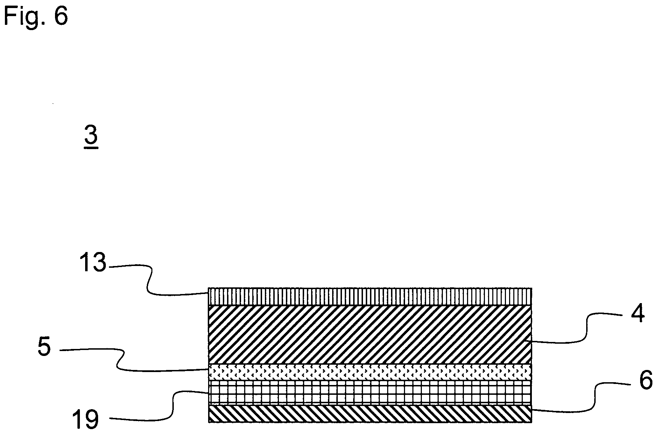

Figure 6 shows a planar composite 3, the upper side lying on the outside of the container 2 produced therefrom and the under-side on the inside. The resulting construction from the outside inwards is as follows: at least one further layer 13 of thermoplastic plastic KSu (usually PE optionally with a filler content of an inorganic particle, such as an inorganic salt) with a weight per unit area in a range of from 8 to 40 g/m², followed by a carrier layer 4 of cardboard with a weight per unit area in a range of from 120 to 400 g/m², followed by a barrier layer 5 of plastic, usually of PA or EVOH, with a weight per unit area in a range of from 2 to 50 g/m², followed by at least one layer of adhesion promoter 19 with a weight per unit area in a range of from 2 to 30 g/m², followed by a first layer 6 of thermoplastic plastic KSa, usually of PE (optionally with a filler content of an inorganic particle, such as an inorganic salt), with a weight per unit area in a range of from 2 to 60 g/m², or of a blend of PE and m-PE, with a weight per unit area in a range of from 2 to 60 g/m².

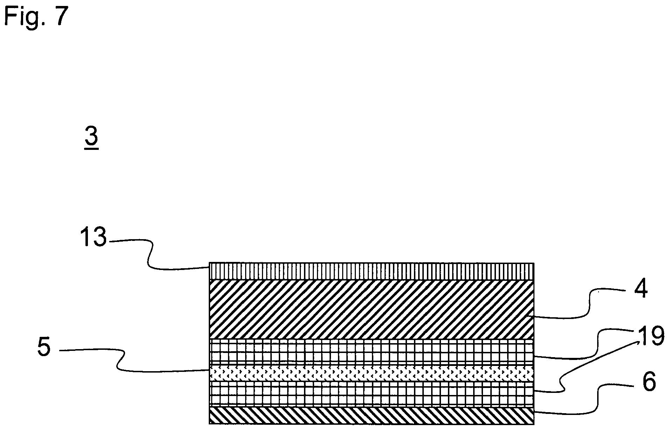

In Figure 7, the planar composite from Figure 6 is supplemented by a further layer 19 of adhesion promoter with a weight per unit area in a range of from 2 to 30 g/m² provided between the barrier layer 5 of plastic and the layer 6 of thermoplastic plastic KSa.

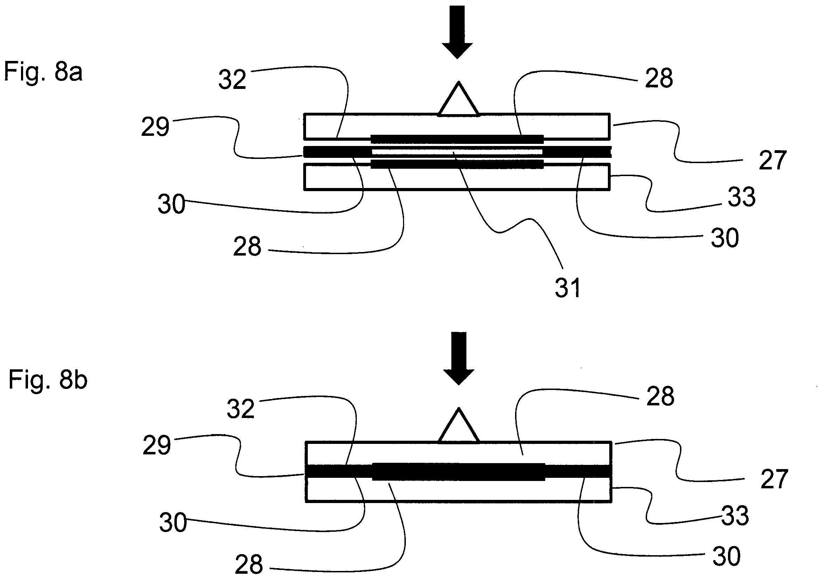

Figure 8a shows a folded composite region 29 of the planar composite 3 between a sonotrode 27 and an anvil 33, both of which each have a surface relief 28. The folded composite region is formed by further reduction of the angle µ in the context of the fold shown in Figure 5b and often has an intermediate space 32 in the regions with few layers. The surface relief 28 is configured such that recesses 32 in the surface relief 28 are opposite the multilayer regions 30 of greater thickness formed during folding, in order to allow a distribution of pressure and mechanical vibration over the sonotrode 27 which is as uniform as possible. Furthermore, the fixing of the folded composite region 29 to be joined, until the intermediate space 32 disappears, is improved in this way. The sonotrode 27 moves on the anvil 33 in the direction of the arrow, a pressure acting on the folded composite region 29 to be joined, which is held between the surface reliefs 28. By this means, the folded composite region, as shown in Fig. 8b, is pressed together and held according to the surface relief, so that the mechanical ultrasonic sound vibration generated by the sonotrode 27 is transmitted to the folded composite 29 and joining by sealing takes place, in that the molten layers of plastic at least partly flow into one another due to the pressing pressure and solidify again by cooling, usually in a holding time, before the sonotrode 27 has released the folded composite region 29 treated in this way.

### LIST OF REFERENCE SYMBOLS

- 1: Interior
- 2: Container
- 3: Planar composite
- 4: Carrier layer
- 5: Barrier layer of plastic
- 6: Layer of thermoplastic plastic KSa
- 7: Inner surface
- 8: Fold
- 9: Fold surface
- 10: Further fold surface
- 11: Part region
- 12: Container region (base)
- 13: Further layer of thermoplastic plastic KSu
- 14: Crease
- 15: Part of large area
- 16: Part of small area
- 17: Edge
- 18: Folding tool
- 19: Adhesion promoter
- 20: Composite production
- 21: Composite fabrication
- 22: Container production
- 23: Container region
- 24: Recess
- 25: Bulge
- 26: Longitudinal sides
- 27: Sonotrode
- 28: Surface relief
- 29: Folded composite region
- 30: Multilayer region
- 31: Intermediate space
- 32: Recesses
- 33: Anvil

## Claims

1. A process for the production of a container (2) surrounding an interior (1), comprising the steps
a. provision of a planar composite (3) comprising
i. a carrier layer (4);
ii. a barrier layer (5) of plastic joined to the carrier layer (4);
iii. at least one layer (6) of thermoplastic plastic KSa which is provided on the side of the barrier layer (5) of plastic facing away from the carrier layer (4);
b. folding of the planar composite (3) to form a fold (8) with at least two fold surfaces (9, 10) adjacent to one another;
c. joining respectively at least a part region (11) of the at least two fold surfaces (9, 10) to form a base or a top of the container (2);
wherein the at least one layer of thermoplastic plastic KSa in step b. is heated above the melting temperature.

2. Process according to claim 1, wherein the at least one layer (6) of thermoplastic plastic KSa has a melting temperature below the melting temperature of the barrier layer (5) of plastic.

3. Process according to one of the preceding claims, wherein the at least one layer (6) of thermoplastic plastic KSa is filled with a particulate inorganic solid.

4. Process according to one of the preceding claims, wherein the fold surfaces (9, 10) form an angle µ of less than 90°.

5. Process according to one of the preceding claims, wherein the at least one layer (6) of thermoplastic plastic KSa is a plastics mixture and comprises a polyolefin prepared by means of a metallocene as one of at least two mixture components.

6. Process according to claim 5, wherein the plastics mixture comprises as one of the at least two mixture components 10 to 50 wt.%, based on the plastics mixture, of the polyolefin prepared by means of a metallocene.

7. Process according to claim 5, wherein the plastics mixture comprises as one of the at least two mixture components more than 50 to 95 wt.%, based on the plastics mixture, of the polyolefin prepared by means of a metallocene.

8. Process according to one of the preceding claims, wherein the joining according to step c. is carried out by sealing by means of the at least one layer (6) of thermoplastic plastic KSa.

9. Process according to one of the preceding claims, wherein the at least one layer (6) of thermoplastic plastic KSa has a melting temperature in the range of from 80 to 155 °C.

10. Process according to one of the preceding claims, wherein in the planar composite (3) the at least one layer (6) of thermoplastic plastic KSa is provided, with respect to the carrier layer (4), towards the interior (1).

11. Process according to one of the preceding claims, wherein at least one further layer (13) of thermoplastic plastic KSu is provided, with respect to the carrier layer (4), facing away from the interior and is joined to the carrier layer (4).

12. Process according to claim 11 wherein the further layer (13) of thermoplastic plastic KSu comprises a polyethylene, a polypropylene or a mixture of these.

13. Process according to claim 11, wherein the at least one further layer (13) of thermoplastic plastic KSu has a melting temperature in a range of from 80 to 155 °C.

14. Process according to one of the preceding claims, wherein the at least one layer (6) of thermoplastic plastic KSa is made of a polyethylene or a polypropylene or a mixture of at least two of these.

15. Process according to one of the preceding claims, wherein the barrier layer (5) of plastic has a melting temperature in a range of from more than 155 to 300 °C.

16. Process according to one of the preceding claims, wherein the barrier layer (5) of plastic is made of polyamide or polyethylene vinyl alcohol or a mixture thereof.

17. Process according to one of the preceding claims, wherein directly before step b the at least one layer (6) of thermoplastic plastic KSa has a temperature above the melting temperature thereof.

18. Process according to one of the preceding claims, wherein the heating is effected by mechanical vibration, induction, middle- or high frequency application, irradiation, contact with a hot solid or hot gas or a combination thereof.

19. Process according to one of the preceding claims, wherein the container (2) is filled with a foodstuff before step b. or after step c.

20. Process according to one of the preceding claims, wherein the planar composite (3) has at least one crease (14) and the fold (8) is effected along the crease (14).

21. Process according to claim 20, wherein the crease (14) demarcates the planar composite (3) into a part (15) of large area and a part (16) of small area compared with the part (15) of large area.

22. Process according to claim 21, wherein the at least one layer (6) of thermoplastic plastic KSa of the part (16) of small area in step b. has a temperature above the melting temperature thereof.

23. Process according to one of claims 20 to 22, wherein the fold (8) is formed by an edge (17) of a folding tool (18) pressing into the crease (14).

24. Process according to one of the preceding claims, wherein no metal foil is provided between the carrier layer (4) and the at least one layer (6) of thermoplastic plastic KSa.

## Patentansprüche

1. Verfahren zur Herstellung eines Behälters (2), der einen Innenraum (1) umgibt, beinhaltend die Schritte
a. Bereitstellen eines flächigen Verbunds (3), umfassend
i. eine Trägerschicht (4);
ii. eine Barriereschicht (5) aus Kunststoff, die mit der Trägerschicht (4) verbunden ist;
iii. mindestens eine Schicht (6) aus thermoplastischem Kunststoff KSa, die auf der der Trägerschicht (4) abgewandten Seite der Barriereschicht (5) aus Kunststoff vorgesehen ist;
b. Falten des flächigen Verbunds (3) zum Bilden einer Faltung (8) mit mindestens zwei Faltflächen (9, 10), die aneinander angrenzen;
c. Verbinden von jeweils mindestens einem Teilbereich (11) der mindestens zwei Falzflächen (9, 10),um einen Boden oder einen Kopf des Behälters (2) zu bilden;
wobei die mindestens eine Schicht aus thermoplastischem Kunststoff KSa in Schritt b. über die Schmelztemperatur erwärmt wird.

2. Verfahren nach Anspruch 1, wobei die mindestens eine Schicht (6) aus thermoplastischem Kunststoff KSa eine Schmelztemperatur unterhalb der Schmelztemperatur der Barriereschicht (5) aus Kunststoff hat.

3. Verfahren nach einem der vorstehenden Ansprüche, wobei die mindestens eine Schicht (6) aus thermoplastischem Kunststoff KSa mit einem teilchenförmigen anorganischen Feststoff gefüllt ist.

4. Verfahren nach einem der vorstehenden Ansprüche, wobei die Faltflächen (9, 10) einen Winkel µ von weniger als 90° bilden.

5. Verfahren nach einem der vorstehenden Ansprüche, wobei die mindestens eine Schicht (6) aus thermoplastischem Kunststoff KSa eine Kunststoffmischung ist und ein Polyolefin, das mittels eines Metallocens hergestellt wurde, als eine von mindestens zwei Mischungskomponenten beinhaltet.

6. Verfahren nach Anspruch 5, wobei die Kunststoffmischung als eine der mindestens zwei Mischungskomponenten 10 bis 50 Gew.-%, bezogen auf die Kunststoffmischung, des mittels eines Metallocens hergestellten Polyolefins beinhaltet.

7. Verfahren nach Anspruch 5, worin die Kunststoffmischung als eine der mindestens zwei Mischungskomponenten mehr als 50 bis 95 Gew.-%, bezogen auf die Kunststoffmischung, des mittels eines Metallocens hergestellten Polyolefins beinhaltet.

8. Verfahren nach einem der vorstehenden Ansprüche, wobei das Verbinden gemäß Schritt c. durch Siegeln mittels der mindestens einen Schicht (6) aus thermoplastischem Kunststoff KSa erfolgt.

9. Verfahren nach einem der vorstehenden Ansprüche, wobei die mindestens eine Schicht (6) aus thermoplastischem Kunststoff KSa eine Schmelztemperatur im Bereich von 80 bis 155°C aufweist.

10. Verfahren nach einem der vorstehenden Ansprüche, wobei im flächigen Verbund (3) die mindestens eine Schicht (6) aus thermoplastischem Kunststoff KSa in Bezug auf die Trägerschicht (4) zum Innenraum (1) hin vorgesehen ist.

11. Verfahren nach einem der vorstehenden Ansprüche, wobei mindestens eine weitere Schicht (13) aus thermoplastischem Kunststoff KSu in Bezug auf die Trägerschicht (4) von dem Innenraum abgewandt vorgesehen und mit der Trägerschicht (4) verbunden ist.

12. Verfahren nach Anspruch 11, wobei die weitere Schicht (13) aus thermoplastischem Kunststoff KSu ein Polyethylen, ein Polypropylen oder eine Mischung davon beinhaltet.

13. Verfahren nach Anspruch 11, wobei die mindestens eine weitere Schicht (13) aus thermoplastischem Kunststoff KSu eine Schmelztemperatur in einem Bereich von 80 bis 155°C hat.

14. Verfahren nach einem der vorstehenden Ansprüche, wobei die mindestens eine Schicht (6) aus thermoplastischem Kunststoff KSa aus einem Polyethylen oder einem Polypropylen oder einer Mischung aus mindestens zwei davon hergestellt ist.

15. Verfahren nach einem der vorstehenden Ansprüche, wobei die Barriereschicht (5) aus Kunststoff eine Schmelztemperatur in einem Bereich von mehr als 155 bis 300°C hat.

16. Verfahren nach einem der vorstehenden Ansprüche, wobei die Barriereschicht (5) aus Kunststoff aus Polyamid oder Polyethylenvinylalkohol oder einer Mischung davon hergestellt ist.

17. Verfahren nach einem der vorhergehenden Ansprüche, wobei die mindestens eine Schicht (6) aus thermoplastischem Kunststoff KSa unmittelbar vor Schritt b. eine Temperatur oberhalb ihrer Schmelztemperatur hat.

18. Verfahren nach einem der vorstehenden Ansprüche, wobei das Erwärmen durch mechanische Schwingung, Induktion, Mittel- oder Hochfrequenzanwendung, Bestrahlung, Kontakt mit einem heißen Feststoff oder einem heißen Gas oder einer Kombination davon bewirkt wird.

19. Verfahren nach einem der vorstehenden Ansprüche, wobei der Behälter (2) vor Schritt b. oder nach Schritt c. mit einem Nahrungsmittel gefüllt wird.

20. Verfahren nach einem der vorstehenden Ansprüche, wobei der flächige Verbund (3) mindestens eine Rillung (14) aufweist und die Faltung (8) entlang der Rillung (14) bewirkt wird.

21. Verfahren nach Anspruch 20, wobei die Rillung (14) einen Teil (15) mit großer Fläche und einen, im Vergleich zu dem Teil (15) mit großer Fläche, Teil (16) mit kleiner Fläche des flächigen Verbunds (3) voneinander abgrenzt.

22. Verfahren nach Anspruch 21, wobei die mindestens eine Schicht (6) aus thermoplastischem Kunststoff KSa des Teils (16) mit kleiner Fläche in Schritt b. eine Temperatur oberhalb ihrer Schmelztemperatur hat.

23. Verfahren nach einem der Ansprüche 20 bis 22, wobei die Faltung (8) durch eine Kante (17) eines Faltwerkzeugs (18) gebildet wird, die in die Rillung (14) drückt.

24. Verfahren nach einem der vorstehenden Ansprüche, wobei zwischen der Trägerschicht (4) und der mindestens einen Schicht (6) aus thermoplastischem Kunststoff KSa keine Metallfolie vorgesehen ist.

## Revendications

1. Procédé de fabrication d'un récipient (2) entourant un intérieur (1), comprenant les étapes suivantes
a. fourniture d'un composite planaire (3) comprenant
i. une couche porteuse (4) ;
ii. une couche barrière (5) en matière plastique reliée à la couche porteuse (4) ;
iii. au moins une couche (6) en matière plastique thermoplastique KSa qui est prévue sur le côté de la couche barrière (5) en matière plastique opposé à la couche porteuse (4) ;
b. pliage du composite plan (3) pour former un pli (8) avec au moins deux surfaces de pliage (9, 10) adjacentes l'une à l'autre ;
c. joindre respectivement au moins une région partielle (11) des au moins deux surfaces de pliage (9, 10) pour former une base ou un sommet du récipient (2) ;
dans laquelle la au moins une couche de matière plastique thermoplastique KSa dans l'étape b. est chauffée au-dessus de la température de fusion.

2. Procédé selon la revendication 1, dans lequel la au moins une couche (6) de matière plastique thermoplastique KSa a une température de fusion inférieure à la température de fusion de la couche barrière (5) de matière plastique.

3. Procédé selon l'une des revendications précédentes, **caractérisé en ce que** l'au moins une couche (6) de matière plastique thermoplastique KSa est remplie d'un solide inorganique particulaire.

4. Procédé selon l'une des revendications précédentes, dans lequel les surfaces de pliage (9, 10) forment un angle µ inférieur à 90°.

5. Procédé selon l'une des revendications précédentes, **caractérisé en ce que** la au moins une couche (6) de matière plastique thermoplastique KSa est un mélange de matières plastiques et comprend une polyoléfine préparée au moyen d'un métallocène comme un des aux moins deux composants du mélange.

6. Procédé selon la revendication 5, dans lequel le mélange de matières plastiques comprend comme l'un des au moins deux composants du mélange 10 à 50 % en poids, par rapport au mélange de matières plastiques, de la polyoléfine préparée au moyen d'un métallocène.

7. Procédé selon la revendication 5, dans lequel le mélange de matières plastiques comprend comme l'un des au moins deux composants du mélange plus de 50 à 95 % en poids, par rapport au mélange de matières plastiques, de la polyoléfine préparée au moyen d'un métallocène.

8. Procédé selon l'une des revendications précédentes, **caractérisé en ce que** la liaison selon l'étape c. est réalisé par scellement au moyen de la au moins une couche (6) de matière plastique thermoplastique KSa.

9. Procédé selon l'une des revendications précédentes, **caractérisé en ce que** la au moins une couche (6) de matière plastique thermoplastique KSa présente une température de fusion comprise entre 80 et 155°C.

10. Procédé selon l'une des revendications précédentes, dans lequel, dans le composite planaire (3), la au moins une couche (6) de plastique thermoplastique KSa est prévue, par rapport à la couche porteuse (4), vers l'intérieur (1).

11. Procédé selon l'une des revendications précédentes, dans lequel au moins une couche supplémentaire (13) en matière plastique thermoplastique KSu est prévue, par rapport à la couche porteuse (4), tournée vers l'extérieur de l'intérieur et est reliée à la couche porteuse (4).

12. Procédé selon la revendication 11, dans lequel la couche supplémentaire (13) de matière plastique thermoplastique KSu comprend un polyéthylène, un polypropylène ou un mélange de ceux-ci.

13. Procédé selon la revendication 11, dans lequel la au moins une couche supplémentaire (13) de matière plastique thermoplastique KSu présente une température de fusion comprise entre 80 et 155 °C.

14. Procédé selon l'une des revendications précédentes, **caractérisé en ce que** la au moins une couche (6) de matière plastique thermoplastique KSa est constituée d'un polyéthylène ou d'un polypropylène ou d'un mélange d'au moins deux de ceux-ci.

15. Procédé selon l'une des revendications précédentes, **caractérisé en ce que** la couche barrière (5) en matière plastique présente une température de fusion dans une plage de plus de 155 à 300°C.

16. Procédé selon l'une des revendications précédentes, dans lequel la couche barrière (5) en matière plastique est constituée de polyamide ou d'alcool vinylique polyéthylène ou d'un mélange de ceux-ci.

17. Procédé selon l'une des revendications précédentes, dans lequel, juste avant l'étape b, la au moins une couche (6) de matière plastique thermoplastique KSa a une température supérieure à sa température de fusion.

18. Procédé selon l'une des revendications précédentes, dans lequel le chauffage est effectué par vibration mécanique, induction, application moyenne ou haute fréquence, irradiation, contact avec un solide chaud ou un gaz chaud ou une combinaison de ceux-ci.

19. Procédé selon l'une des revendications précédentes, dans lequel le récipient (2) est rempli d'une denrée alimentaire avant l'étape b ou après l'étape c.

20. Procédé selon l'une des revendications précédentes, dans lequel le composite planaire (3) présente au moins un trait de pli (14) et le pli (8) est effectué le long du trait de pli (14).

21. Procédé selon la revendication 20, dans lequel le trait de pli (14) délimite le composite planaire (3) en une partie (15) de grande surface et une partie (16) de petite surface en comparaison avec la partie (15) de grande surface.

22. Procédé selon la revendication 21, dans lequel la au moins une couche (6) de matière plastique thermoplastique KSa de la partie (16) de petite surface de l'étape b. a une température supérieure à sa température de fusion.

23. Procédé selon l'une des revendications 20 à 22, dans lequel le pli (8) est formé par un bord (17) d'un outil de pliage (18) pressant dans le trait de pli (14).

24. Procédé selon l'une des revendications précédentes, dans lequel aucune feuille métallique n'est prévue entre la couche porteuse (4) et la au moins une couche (6) de matière plastique thermoplastique KSa.
